# EUROPEAN PATENT SPECIFICATION

(11) **EP 0 446 246 B1**
(45) Date of publication and mention of the grant of the patent: **15.06.1994**
(21) Application number: 89913043.9
(22) Date of filing: 30.11.1989
(51) Int. Cl.: G01N 11/14, G01N 9/32

(54) **A METHOD AND DEVICE FOR MEASURING THE VISCOSITY AND/OR THE DENSITY OF A FLOWING FLUID**
VERFAHREN UND GERÄT ZUR MESSUNG DER VISKOSITÄT UND/ODER DER DICHTE EINER FLIESSENDEN FLÜSSIGKEIT
METHODE ET DISPOSITIF DE MESURE DE LA VISCOSITE ET/OU DE LA DENSITE D'UN FLUIDE

(30) Priority: 01.12.1988 SE 8804354
(43) Date of publication of application: 18.09.1991
(73) Proprietor: NOREN, Anders, S-182 63 Djursholm (SE)
(72) Inventor: NOREN, Anders, S-182 63 Djursholm (SE)
(74) Representative: Nyberg, Bengt
(86) International application number: SE8900701
(87) International publication number: WO9006500

(56) References cited:
- DE-A- 3 326 691
- US-A- 3 465 574
- US-A- 4 773 253

## Description

The present invention relates to a method and to a device for measuring the viscosity and/or the density of a fluid flowing in a closed passage, the device comprising a rotor which is fully surrounded by the fluid and the speed of rotation of which is directly dependent on the flow rate of the fluid passing through the passage.

From US-A-3 465 574 is known an In-line flow viscometer comprising two concentric drums. A predetermined restraining torque is applied to the inner drum whereby - as the fluid flows through the pipe - the torque-restrained inner drum will rotate more slowly than the outer drum and the difference in the rotational speeds is inversly proportional to the viscosity of the fluid in the annular space between the drums.

The object of the present invention is to provide a novel method and a novel device for measuring the viscosity and/or density of a fluid flowing in a closed passage such as to enable such measurements to be made in a simpler fashion than has hitherto been possible. The invention is characterized in that the rotor is driven directly by the fluid and in that there is connected to the rotor a braking device which can be activated and deactivated and the braking force of which can be adjusted so that according to the braking force applied, the rotor will rotate at a slower speed, to a greater or lesser extent, in relation to an un-braked rotor or to a rotor which has been braked with a smaller braking force; and in that measuring means are provided for determining the resultant different speeds of rotation of the rotor, this difference in rotor speeds being a measurement of the viscosity and/or density of the fluid.

In the case of one preferred embodiment of the inventive measuring device, the rotor is carried symmetrically by a shaft which extends substantially at right angles to the longitudinal axis of the fluid passage and the rotor shaft is positioned asymmetrically in relation to the longitudinal axis of said passage, and in which device the measuring means operative to determine the rotational speed of the rotor comprises at least one bore in the rotor which extends parallel with the rotor shaft and through which light is conducted from a light source arranged on one side of the rotor to a light-receiver arranged on the other side of the rotor. According to one preferred embodiment, the braking device comprises an electromagnetic brake having a coil and magnetic poles.

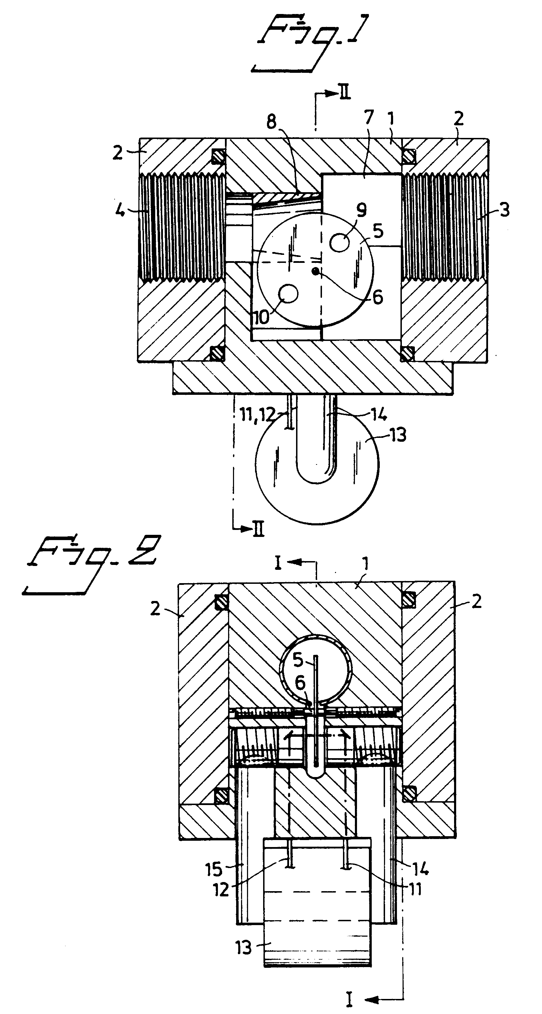

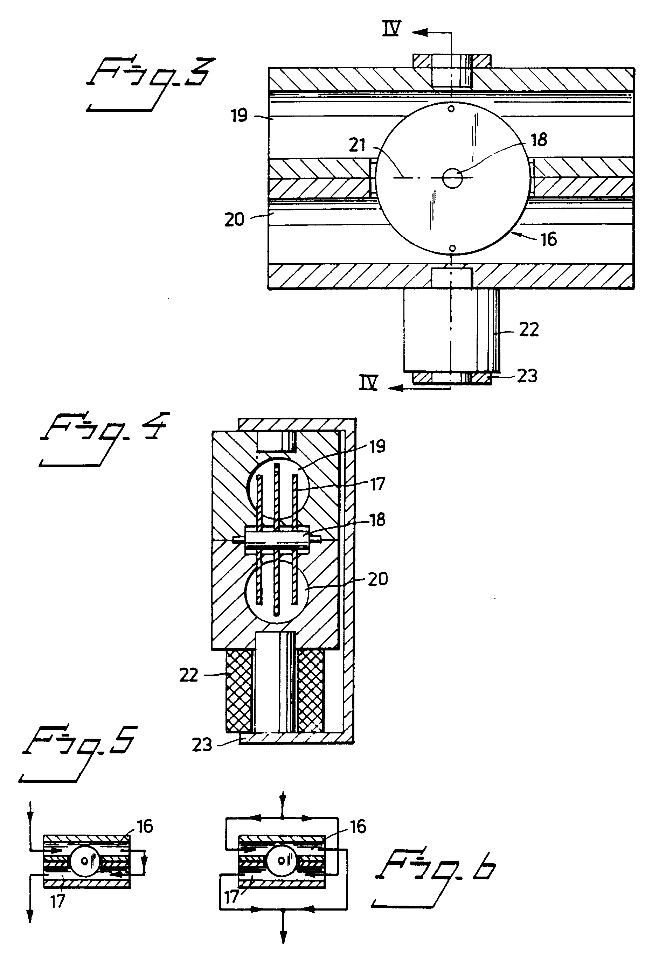

The invention will now be described in more detail with reference to the accompanying drawings which illustrate two preferred embodiments of an inventive viscosity and/or density measuring device. Figure 1 is a longitudinal sectional view taken on the line I-I in Figure 2, and Figure 2 is a cross-sectional view taken on the line II-II in Figure 1. Figure 3 is a longitudinal sectional view of a second embodiment of the inventive device and Figure 4 is a cross-sectional view taken on the line IV-IV in Figure 3. Figures 5 and 6 illustrate, in smaller scale, coupling of the device illustrated in Figures 3 and 4 in a fluid passage.

In the embodiment illustrated in Figures 1 and 2, the body 1 of the measuring device is incorporated in a passage 2 having an inlet 3 and an outlet 4. The rotor of said device has the form of a circular plate 5 which is journalled symmetrically on a shaft 6 which extends perpendicularly to the longitudinal axis of the passage 2. The plate 5 is mounted in a space 7 in the body 1 which is located asymmetrically to the longitudinal axis of the passage 2. Located at the outlet of the space 7 leading to the outlet 4 of the passage is a flow-throttling nozzle 8. The plate 5 has provided therein two bores 9 and 10 which extend parallel with the axis of the plate 5. These bores are operative to receive light from one light-conductor, e.g. the light-conductor 11, and to conduct said light to another light-conductor, e.g. the light-conductor 12. This will enable the rotational speed of the plate 5 to be measured on the basis of the time which passes between those time points at which the light-conductor 12 receives light from the light-conductor 11.

The viscosity and/or density meter has a brake device in the form of an eddy-current brake device comprising a coil 13 and two magnetic poles 14 and 15. As an alternative to an electromagnetic brake device, the inventive meter may be provided with a permanent-magnetic brake provided with adjustable magnets, or with a mechanical brake having force applying means.

The embodiment of the meter illustrated in Figures 3, 4, 5 and 6 includes a rotor 16 which comprises three mutually parallel and circular plates 17 journalled on a common shaft 18. The rotor 16 is mounted so as to lie in two mutually parallel conduits 19, 20 which are the mirror image of one another about an imaginary axis 21 passing through the centre of the rotor 16. The rotor journals are fully relieved of the forces exerted by the fluid on the rotor, when the fluid flows in mutually opposite directions through the conduits 19, 20, as illustrated in Figures 5 and 6. In the Figure 5 illustration, the conduits 19, 20 are connected in series, whereas in the Figure 6 illustration said conduits are connected in parallel. The brake device of this embodiment has the form of an eddy-current brake device having a coil 22 and magnetic poles 23.

In accordance with the inventive method in the case of the embodiment illustrated in Figures 1 and 2 the rotor 4 is connected to an activatable and deactivatable brake device 13, 14, 15, the braking force of which can be adjusted. The braking force exerted by said brake device is adjusted so that the rotor will rotate at a lower speed, to a greater or a lower extent, than a rotor which is not braked or a rotor whose speed has been retarded with a smaller braking force. Thus, constant rotor speeds are determined and the viscosity and/or the density of the fluid calculated on the basis of the difference in these rotational speeds.

The inventive measuring device is not limited to the aforedescribed, preferred embodiments, since modifications are possible within the scope of the following claims.

For instance, the brake device may have the form of a magnetic brake of the eddy-current or hysteresis type, comprising a displaceable permanent magnet and a brake-rotor of ferromagnetic material when the brake device is of the hysteresis kind, and of non-ferromagnetic material when the brake device is of the eddy-current kind. The brake device may also comprise a displaceable permanent magnet and may then be provided with a push rod provided with a knob for manually activating and deactivating the magnetic field.

Other rotors than the rotors illustrated in the drawings are also conceivable, such as a screw rotor in which the helix is symmetrically composed with a right and a left screw for the purpose of balancing axial forces. Another conceivable rotor is a paddle wheel or impeller driven by the liquid flowing from the inlet nozzle to the outlet opening. It is also possible to use with the inventive measuring device an impeller provided with peripheral blades and which is driven by the action of fluid flowing in through an opening provided in the periphery of the impeller and subsequently exiting peripherally in a channel and out through an outlet. The impeller housing closely embraces the impeller in the region between said opening and said outlet, and hence fluid is unable to flow in this region from inlet to outlet. As the impeller rotates, the fluid is slung outwards by the blades, subsequently to return in a direction towards the impeller shaft such that the fluid will flow along flow lines similar in appearance to a sparsely-wound helical spring where the helix is placed around the periphery from inlet to outlet. The device will therewith function as a "density-driven" turbine in the case of lowly-viscous fluids, and as a viscosity-driven impeller in the case of highly-viscous fluids.

Another conceivable type of meter is one in which the rotor has the form of a turbine wheel and the brake device comprises electromagnets or permanent magnets provided with displaceable pole shoes. A meter of this configuration is particularly suited for measuring the density of fluids and, in combination with volumetric-flow measurement, is able to indicate mass flow with the aid of a simple aritmethic operation. Such a meter is of particular benefit when measuring gas flows in which the density can vary radically as a result of the pronounced influence of pressure and temperature on the density of gases. When the driving forces are small because density is low, it has been established that a significant lag in rotor speed is obtained with moderate magnetic fields. Consequently, the magnetic poles may be inserted into a bore provided in the casing, without needing to penetrate the channel wall. This reduces the risk of leakage to insignificant values. A simpler construction can be achieved by using a one-sided horseshoe-type magnet which can be pushed in and out.

The device may be constructed so that during a measuring process the rotor will constantly rotate at mutually the same speed when no load is on the rotor, by providing an adjustable constriction or a fixed constriction upstream or downstream of the meter, so as to maintain the prescribed rotor speed. The reduction in rotor speed caused by braking can then be read directly as the viscosity and/or density, by appropriate graduation of a speed scale.

The measuring means incorporated in the inventive device can be connected to a microprocessor provided with LCD-display.

The measuring means may include a graduated scale which discloses how close to the rotor the permanent magnet must be brought in order to achieve a given lag in rotor speed.

Although the invention has been described in the aforegoing with reference to conceivable embodiments thereof, it will be understood that other embodiments can also be realized within the scope of the invention as defined in the following claims.

## Claims

1. A method for measuring the viscosity and/or density of a flowing fluid in a closed passage, in which a rotor which is mounted in the passage and surrounded fully by said fluid and the rotational speed of which is directly dependent on the rate of flow of said fluid, is caused to rotate by the fluid flowing in said passage, **characterized** in that the fluid is caused to flow in the passage at right angles and asymmetrically to the rotor shaft and the rotor is driven directly by the fluid and connected to an activatable and deactivatable brake means having adjustable braking force; adjusting said braking force so as to obtain a greater or smaller lag in rotor speed in relation to an unbraked rotor or to a rotor braked with a smaller force; determining the resultant different constant rotational speeds of the rotor; and establishing the viscosity and/or the density of the fluid on the basis of the difference in said rotational speeds.

2. A device for carrying out the method according to Claim 1 when measuring the viscosity and/or the density of a fluid flowing in a closed passage (2), comprising a rotor (5) which is fully surrounded by the fluid and the rotational speed of which is directly dependent on the rate of flow of the fluid through said passage (2), **characterized** in that the rotor (5) is driven directly by the fluid; in that the rotor (5) is carried symmetrically on a shaft (6) which extends substantially at right angles to the longitudinal axis of the passage (2); in that the rotor shaft (6) is positioned asymmetrically in relation to the longitudinal axis of the passage (2); in that the rotor (5) is connected to an activatable and deactivatable brake means (13, 14, 15) having an adjustable braking force which, according to the brake setting, is operative to cause a greater or a smaller lag in the speed of the rotor (5) in relation to an unbraked rotor or a rotor braked with a smaller force; and in that measuring means (9, 10, 11, 12) are provided for determining the resultant different rotational speeds of the rotor (5), the difference in said speeds being a measurement of the viscosity and/or the density of the fluid.

3. A device according to Claim 2 for measuring viscosity, **characterized** in that the rotor is in the form of a plate (5), for instance a circular plate or a polygonal plate, preferably a square plate.

4. A device according to Claim 2 for measuring viscosity, **characterized** in that the rotor has the form of a circular cylinder.

5. A device according to any one of Claims 2-4, **characterized** in that the brake means comprises an electromagnetic brake arrangement comprising a coil (13) and magnetic poles (14, 15).

6. A device according to any one of Claims 2-5, **characterized** in that the brake means comprises a permanent-magnetic brake provided with positionally adjustable magnets.

7. A device according to Claim 2 for measuring density, **characterized** in that the rotor comprises a bladed impeller, e.g. a peripheral impeller.

8. A device according to any one of Claims 2-7, **characterized** in that the rotor shaft (18) is positioned symmetrically in relation to two mutually parallel and mutually spaced conduits (19, 20) in which the fluid flows in opposite directions.

9. A device according to Claim 2, **characterized** in that the rotor comprises a plurality of mutually parallel and circular plates (17) journalled on one and the same shaft (18).

## Patentansprüche

1. Verfahren zur Messung der Viskosität und/oder Dichte eines fließenden Fluids in einem geschlossenen Durchgang, wobei ein Rotor, der in den Durchgang befestigt und vollständig von dem Fluid umgeben ist und dessen Rotationsgeschwindigkeit direkt von der Durchflußrate des Fluids abhängt, durch das in dem Durchgang fließende Fluid zum Rotieren gebracht wird, **dadurch gekennzeichnet**, daß das Fluid dazu gebracht wird, in dem Durchgang in rechten Winkeln und asymmetrisch zu dem Rotorschaft zu fließen, und daß der Rotor direkt durch das Fluid angetrieben wird und an ein- und ausschaltbare Bremseinrichtungen mit einstellbarer Bremskraft angeschlossen ist, wobei die Bremskraft zur Erreichung einer größeren oder kleineren Verzögerung der Rotorgeschwindigkeit relativ zu einem ungebremsten Rotor oder zu einem mit geringerer Kraft gebremsten Rotor eingestellt wird, wobei die sich ergebenden unterschiedlichen konstanten Rotationsgeschwindigkeiten des Rotors festgestellt werden, und wobei die Viskosität und/oder die Dichte des Fluids auf der Basis der Differenz der Rotationsgeschwindigkeiten festgelegt wird.

2. Vorrichtung zur Ausführung des Verfahrens nach Anspruch 1 beim Messen der Viskosität und/oder der Dichte eines in einem geschlossenen Durchgang (2) fließenden Fluids, mit einem vollkommen von dem Fluid umgebenen Rotor (5), dessen Rotationsgeschwindigkeit direkt von der Durchflußrate des Fluids durch den Durchgang (2) abhängt, **dadurch gekennzeichnet**, daß der Rotor (5) direkt von dem Fluid angetrieben wird, daß der Rotor (5) symmetrisch auf einem Schaft (6) gehalten ist, der sich im wesentlichen rechtwinklig zu der Längsachse des Durchgangs (2) erstreckt, daß der Rotorschaft (6) asymmetrisch zu der Längsachse des Durchgangs (2) angeordnet ist, daß der Rotor (5) mit einer ein- und ausschaltbaren Bremseinrichtung (13, 14, 15) mit einstellbarer Bremskraft verbunden ist, die, entspechend der Bremsenanordnung, eine größere oder kleinere Verzögerung der Geschwindigkeit des Rotors (5) relativ zu einem ungebremsten Rotor oder einem mit geringerer Kraft gebremsten Rotor bewirkt, und daß Meßeinrichtungen (9, 10, 11, 12) zur Feststellung der sich ergebenden unterschiedlichen Rotationsgeschwindigkeiten des Rotors (5) vorgesehen sind, wobei der Unterschied in den Geschwindigkeiten eine Messung der Viskosität und/oder der Dichte des Fluids ist.

3. Vorrichtung nach Anspruch 2 zur Messung der Viskosität, **dadurch gekennzeichnet**, daß der Rotor die Form einer Platte (5), bspw. einer kreis-oder polygonförmigen Platte, vorzugsweise einer quadratischen Platte, aufweist.

4. Vorrichtung nach Anspruch 2 zur Messung von Viskosität, **dadurch gekennzeichnet**, daß der Rotor die Form eines kreisförmigen Zylinders aufweist.

5. Vorrichtung nach einem der Ansprüche 2 bis 4, **dadurch gekennzeichnet**, daß die Bremseinrichtung eine elektromagnetische Bremsenanordnung mit einer Spule (13) und magnetischen Polen (14, 15) aufweist.

6. Vorrichtung nach einem der Ansprüche 2 bis 5, **dadurch gekennzeichnet**, daß die Bremseneinrichtung eine Permanentmagnetbremse mit in ihrer Position einstellbaren Magneten aufweist.

7. Vorrichtung nach Anspruch 2 zur Messung von Dichte, dadurch gekennzeichnet, daß der Rotor ein Laufrad mit Schaufeln, bspw. ein peripheres Laufrad aufweist.

8. Vorrichtung nach einem der Ansprüche 2 bis 7, **dadurch gekennzeichnet**, daß der Rotorschaft (18) symmetrisch zu zwei zueinander parallel und beabstandeten Kanälen (19, 20) angeordnet ist, in denen das Fluid in entgegengesetzten Richtungen fließt.

9. Vorrichtung nach Anspruch 2, **dadurch gekennzeichnet**, daß der Rotor eine Vielzahl von zueinander parallelen und kreisförmigen Platten (17) aufweist, die auf ein und demselben Schaft (18) gelagert sind.

## Revendications

1. Procédé pour mesurer la viscosité et/ou la densité d'un fluide circulant dans un passage fermé, selon lequel un rotor, qui est monté dans le passage et est entouré entièrement par ledit fluide et dont la vitesse de rotation dépend directement du débit dudit fluide, est entraîné en rotation par le fluide circulant dans ledit passage, caractérisé en ce que le fluide est amené à circuler dans le passage, perpendiculairement et de façon dissymétrique par rapport à l'arbre du rotor, et ce dernier est entraîné directement par le fluide et est raccordé à des moyens de freinage pouvant être activé et désactivé et dont la force de freinage est réglable; qu'on règle ladite force de freinage de manière à obtenir un décalage plus important ou plus faible de la vitesse du rotor par rapport à un rotor non freiné ou à un rotor freiné avec une force inférieure; qu'on détermine les vitesses de rotation constantes différentes obtenues du rotor; et qu'on détermine la viscosité et/ou la densité du fluide sur la base de la différence entre lesdites vitesses de rotation.

2. Dispositif pour la mise en oeuvre du procédé selon la revendication 1 lors de la mesure de la viscosité et/ou d'une densité d'un fluide circulant dans un passage fermé (2), comprenant un rotor (5) qui est complètement entouré par le fluide et dont la vitesse de rotation dépend directement du débit du fluide dans ledit passage (2), caractérisé en ce que le rotor (5) est entraîné directement par le fluide; en ce que le rotor (5) est supporté symétriquement par un arbre (6) qui s'étend sensiblement perpendiculairement à l'axe longitudinal du passage (2); en ce que l'arbre (6) du rotor est disposé de façon dissymétrique par rapport à l'axe longitudinal du passage (2); en ce que le rotor (5) est raccordé à des moyens de freinage (13, 14, 15) pouvant être activés et désactivés et possédant une force de freinage réglable qui, en fonction du serrage des freins, peut provoquer un décalage plus important ou plus faible de la vitesse du rotor (5) par rapport à un rotor non freiné ou à un rotor freiné avec une force inférieure; et en ce que des moyens de mesure (9, 10, 11, 12) sont prévus pour déterminer les vitesses de rotation différentes résultantes du rotor (5), la différence entre lesdites vitesses étant une mesure de la viscosité et/ou d'une densité du fluide.

3. Dispositif selon la revendication 2 pour la mesure de la viscosité, caractérisé en ce que le rotor possède la forme d'une plaque (5), par exemple une plaque circulaire ou une plaque polygonale, de préférence une plaque carrée.

4. Dispositif selon la revendication 2 pour la mesure de la viscosité, caractérisé en ce que le rotor possède la forme d'un cylindre circulaire.

5. Dispositif selon l'une quelconque des revendications 2-4, caractérisé en ce que les moyens de freinage comprennent un système de frein électromagnétique comprenant une bobine (13) et des pôles magnétiques (14, 15).

6. Dispositif selon l'une quelconque des revendications 2-5, caractérisé en ce que les moyens de freinage comprennent un frein à action magnétique permanente, équipé d'aimants dont la position est réglable.

7. Dispositif selon la revendication 2 pour la mesure d'une densité, caractérisé en ce que le rotor comprend une roue à ailettes, par exemple une roue périphérique.

8. Dispositif selon l'une quelconque des revendications 2-7, caractérisé en ce que l'arbre (18) du rotor est positionné symétriquement par rapport à deux conduits réciproquement parallèles et espacés (19, 20), dans lesquels le fluide circule dans des directions opposées.

9. Dispositif selon la revendication 2, caractérisé en ce que le rotor comprend une pluralité de plaques circulaires (17) mutuellement parallèles et tourillonnées sur le même arbre (18).
